# EUROPEAN PATENT APPLICATION

(11) **EP 4 331 700 A1**
(43) Date of publication of application: **06.03.2024**
(21) Application number: 23194526.2
(22) Date of filing: 31.08.2023
(51) Int. Cl.: B01D 11/02

(54) **METHOD AND APPARATUS FOR EXTRACTING A COMPOUND FROM A MATERIAL**

(30) Priority: 31.08.2022 GB 202212669
(71) Applicant: Berchie, Derek Osei, London W1T 6EB (GB)
(72) Inventor: Berchie, Derek Osei, London W1T 6EB (GB)
(74) Representative: Ellis, Michael James

(57) **Abstract**

An extraction apparatus (100) comprising a boiler (102), an extraction chamber (106) for holding material (116) from which a compound is to be extracted, and a condenser (114) for condensing the vaporized solvent, and returning the condensed solvent to the extraction chamber. A fluid connection (112) between the boiler and the extraction chamber allows passage of vaporized solvent (104) from the boiler to the extraction chamber and condensed solvent (104) from the extraction chamber to the boiler. During use the solvent vaporizes, passes into the extraction chamber and bubbles through condensed solvent within said chamber, thereby agitating said condensed solvent; vaporized solvent condenses and returns to the extraction chamber; condensed solvent extracts the compound by interacting with the material in said chamber; at least a portion of condensed solvent containing the extracted compound returns to the boiler from said chamber; this cycle is repeated. A corresponding method is also disclosed.

## Description

### FIELD OF THE INVENTION

The invention relates to a method and apparatus for extracting a compound from a material.

### BACKGROUND OF THE INVENTION

~ It is often desirable to extract one or more compounds from a material, such as dried samples of plants or fungus. The compound(s) to be extracted may or may not be known in advance, and may be extracted to allow for testing of compound activity, purification and characterization. For example, there is an ongoing search for new natural compounds that have activity against cancer cells.

### SUMMARY OF THE INVENTION

In accordance with a first aspect, there is provided an extraction apparatus comprising:
a boiler for holding a solvent;
an extraction chamber for holding material from which a compound is to be extracted by the solvent;
a condenser for condensing vaporized solvent, and returning the condensed solvent to the extraction chamber; and
a fluid connection between the boiler and the extraction chamber for allowing passage of vaporized solvent from the boiler to the extraction chamber and condensed solvent from the extraction chamber to the boiler;
the extraction apparatus being configured such that, when the extraction apparatus is in use, the solvent moves repeatedly through a cycle in which:
   the solvent vaporizes within the boiler;
   the vaporized solvent passes from the boiler into the extraction chamber by way of the at least one fluid connection, and bubbles through condensed solvent within the extraction chamber so as to agitate the condensed solvent;
   the vaporized solvent condenses in the condenser and returns as condensed solvent to the extraction chamber; and
   the condensed solvent interacts with the material in the extraction chamber to extract the compound.

The bubbling of vaporized solvent through condensed solvent approach may offer improved agitation of material from which compounds are being extracted.

The extraction apparatus may be configured such that at least a portion of the condensed solvent containing the extracted compound returns to the boiler from the extraction chamber by way of the at least one fluid connection.

Allowing at least some of the condensed solvent to return to the boiler may allow for improved extraction, as the returned solvent can be revaporized to continue the cycle.

The at least one fluid connection may comprise at least one throttle for controlling a rate(s) at which:
the vaporized solvent passes from the boiler to the extraction chamber; and/or
the condensed solvent returns to the extraction chamber from the boiler.

Controlling the rate(s) in this way may allow optimization of the depth of condensed solvent in the extraction chamber and/or improved control of the amount of solvent distributed between the boiler and the extraction chamber.

The at least one throttle may comprise a valve. Optionally, the at least one throttle is adjustable to control the rate(s).

A valve may offer a simple and reliable way of throttling solvent.

The extraction apparatus may comprise a controller for controlling the rate(s) by modulating the at least one throttle.

Using a controller may offer the ability to improve, and/or at least semi-automate, control of the extraction apparatus when in use.

The controller may comprise one or more level sensors for sensing an amount of the condensed solvent within the extraction chamber, the controller being configured to control the rate(s), based at least partly on the sensed amount, so as to control the amount of the condensed solvent within the extraction chamber.

The extraction apparatus may comprise one or more flow sensors for determining:
a flow rate of the condensed solvent from the extraction chamber into the boiler; and/or
a flow rate of the vaporized solvent from the boiler into the extraction chamber.

The controller may be configured to control the rate(s) such that the amount of the condensed solvent within the extraction chamber tends towards a constant.

The fluid connection may comprise at least one conduit or aperture disposed fluidically between the boiler and the extraction chamber

The extraction apparatus may be configured such that the vaporized solvent from the boiler and the condensed solvent from the extraction chamber pass in opposite directions through the least one conduit or aperture.

Allowing the different solvent phases to pass in opposite directions may offer improved, simpler, or at least partly self-regulating control of the extraction apparatus.

The extraction apparatus may comprise a first connector for connection to a source of reduced pressure, the extraction apparatus being configured such that, in use, reducing the pressure within the extraction apparatus by way of the first connector reduces a boiling temperature of the solvent within the boiler.

By reducing a boiling temperature of the solvent in this way, thermolabile compounds may be less degraded during extraction.

In accordance with a second aspect, there is provided a method of extracting a compound from a material, using the apparatus of any preceding claim, the method comprising:
loading the apparatus with solvent;
loading the material into the extraction chamber;
reducing a pressure within the extraction apparatus, and/or heating the solvent in the boiler, such that the solvent vaporizes;
passing the vaporized solvent from the boiler through the extraction chamber by way of the at least one fluid connection, such that the vaporized solvent bubbles through the condensed solvent in the extraction chamber so as to agitate the condensed solvent;
condensing the vaporized solvent in the condenser; and
returning the condensed solvent to the extraction chamber such that it extracts the compound from the material in the extraction chamber.

The method may comprise returning at least a portion of the condensed solvent containing the extracted compound to the boiler from the extraction chamber.

The method may comprise controlling a rate(s) at which:
the vaporized solvent passes from the boiler to the extraction chamber; and/or
the condensed solvent returns to the extraction chamber from the boiler;
such that condensed solvent accumulates in the extraction chamber, so as to at least partly submerge the material.

The method may comprise:
sensing an amount of the condensed solvent within the extraction chamber; and
controlling the rate(s) so as to control the amount of the condensed solvent within the extraction chamber.

The method may comprise controlling the rate(s) such that the amount of the condensed solvent within the extraction chamber tends towards a constant.

The fluid connection may comprise at least one conduit or aperture disposed fluidically between the boiler and the extraction chamber, and the method may comprise passing the vaporized solvent from the boiler, and the condensed solvent from the extraction chamber, in opposite directions through the least one conduit or aperture.

The method may comprise reducing the pressure within the extraction apparatus so as to reduce a boiling temperature of the solvent within the boiler.

The method may comprise reducing the pressure within the extraction apparatus, such that a boiling temperature of the solvent within the boiler is lower than an ambient temperature.

The method may comprise reducing the pressure within the extraction apparatus such that a boiling temperature of the solvent within the boiler reaches a sufficiently low temperature that ambient heat passing into the boiler is sufficient to maintain ongoing vaporization of the solvent at a substantially constant vacuum pressure.

This may allow the use of lower extraction temperatures, and potentially avoid the need for a separate heat source.

Where a flammable solvent is used, the reduced temperature and oxygen levels due to the vacuum may also reduce the likelihood of solvent ignition.

Increased vacuum and/or reduced temperature may reduce the risk of thermal degradation and/or oxidation of extracted compounds

### BRIEF DESCRIPTION OF THE DRAWINGS

Aspects and implementations will now be described, without limitation and by way of example only, with reference to the accompanying drawings, in which:
Figure 1 is a schematic vertical sectional view of an extraction apparatus;
Figure 2 is a schematic vertical sectional view of a further extraction apparatus;
Figure 3 is a schematic side view of a further extraction apparatus; and
Figure 4 is a flowchart showing a method of extracting a compound from a material.

### DETAILED DESCRIPTION OF THE INVENTION

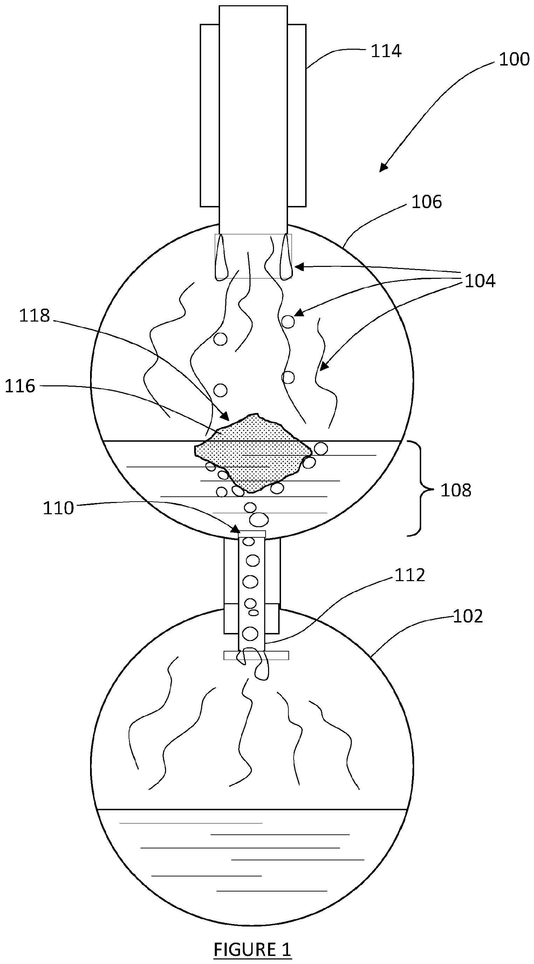

Referring to the drawings, Figure 1 shows an extraction apparatus 100. The major components of extraction apparatus 100 can be formed from laboratory-grade borosilicate glass for small scale operation, although any other suitable materials (including combinations of different materials) can be used. This is particularly the case where the apparatus is to be used at an industrial scale, where glassware may not be suitable, for reasons of cost and/or practicality for example.

Extraction apparatus 100 comprises a boiler 102, which has a lower portion within which a solvent 104 is retained when extraction apparatus 100 is in use (as described in more detail below).

Extraction apparatus 100 comprises an extraction chamber 106. In the implementation of Figure 1, extraction chamber 106 is positioned directly above boiler 102, although in other implementations, extraction chamber 106 can be offset from boiler 102.

Extraction chamber 106 includes a lower portion 108 that tapers towards a central outlet 110.

A fluid connection in the form of a conduit 112 extends between outlet 110 and 102 and extraction chamber 106, providing a fluid link between them. In the implementation of Figure 1, conduit 112 is an extension of outlet 110, but in other implementations can be a separate component or can be integrated with the boiler, for example. Conduit 112 allows passage of vaporized solvent from boiler 102 to extraction chamber 106, and condensed solvent from extraction chamber 106 to boiler 102, as described in more detail below.

Extraction apparatus 100 comprises a condenser 114. In the implementation of Figure 1, condenser 114 is positioned directly above extraction chamber 106, although in other implementations, condenser 114 can be offset from extraction chamber 106.

Condenser 114 extends directly upwards from extraction chamber 106, but in other implementations, can extend at an angle. In the implementation of Figure 1, condenser 114 takes the form of a liquid-cooled jacket condenser, but any other type of condenser may be used to suit implementation requirements. Condenser 114 is configured to condense vaporized solvent and return it to extraction chamber 106, as described in more detail below.

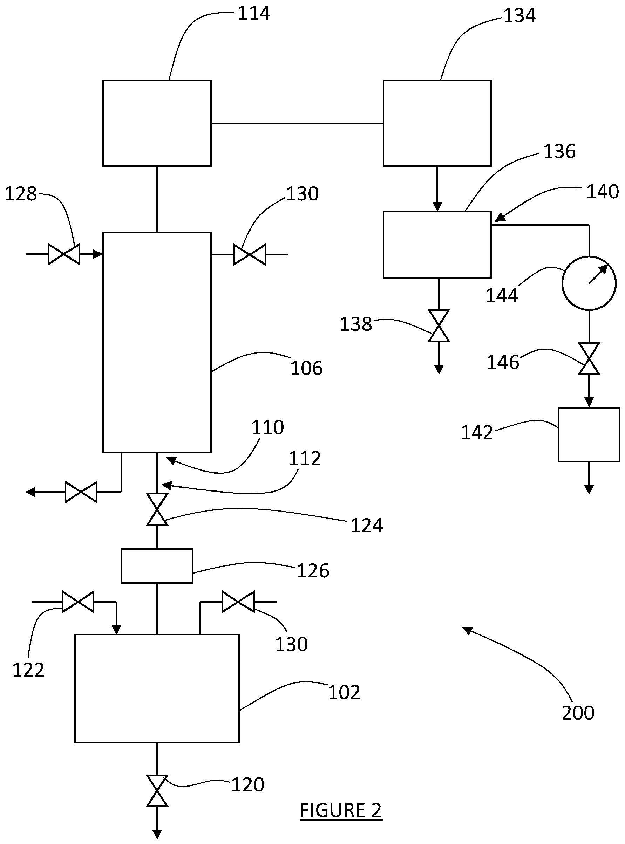

The skilled person will appreciate that Figure 1 is a simplified schematic view, and that elements such as seals, valves, and the like are omitted for simplicity. The implementation of Figure 2 shows additional implementation details, any or all of which can be applied to the implementation of Figure 1, in any suitable combination.

In use, boiler 102 is loaded with solvent 104. Solvent 104 is selected for its solvent properties. For example, where it is desired to extract water-soluble components from material, water can be used as solvent 104. Alternatively, any suitable polar or non-polar solvent can be used, to suit the intended extraction. For example, a solvent can be selected on the basis of having a gaseous phase that can be generated to migrate through extraction chamber and condensed back down into extraction chamber to allow simultaneous gas and liquid phase extraction, where condensate remains mostly in liquid phase at extraction temperature and pressure.

A non-limiting list of such potential solvents includes acetic acid, acetone, acetonitrile, n-pentanol, n-butanol, tert-butanol, butyl acetate, chlorobenzene, chloroform, cyclohexane, dichloromethane, diethylether, 1-2 dichloroethylene, diisopropyl ether, dioxane, dimethylformamide, ethanol, ethyl acetate, ethylmethyl ketone, heptane, hexane, isopropyl alcohol, isoamyl alcohol, methanol, pentane, n-propyl alcohol, pentachloroethane, 1-1-2-2-tetrachloroethane, 1-1-1-trichloroethane, tetrachloroethylene, tetrachloromethane, tetrahydrofurane, toluene, trichloroethylene, water and xylene.

The particular solvent can be selected based on any subset of its properties, including the relationship of its vapour/pressure curve to the intended extraction, its polarity, its extraction characteristics, and its relative safety (e.g., to humans and/or the environment). References to a solvent includes mixtures of one or more solvents and optionally one or more solutes dissolved within the solvent(s).

The components of extraction apparatus 100, including boiler 102, extraction time 106, conduit 112, and condenser 114, together form a sealed vessel within which extraction of compounds of interest can take place.

In use, material 116 from which compounds are to be extracted is loaded into extraction chamber 106. In the example shown, material 116 is dried plant leaf, although any other suitable material, whether fresh or dried, and of vegetable, fungal or animal origin, can be used.

While material 116 can be placed into extraction chamber 106 loose, it may be preferable to place it into a porous container. For example, in the implementation of Figure 1, material 116 is enclosed within a porous pouch 118. Porous pouch 118 operates in much the same manner as a teabag, allowing solvent 104 to pass through it and into contact with material 116 to extract compounds of interest. Porous pouch 118 can, for example, be made from a 1-micron mesh polymeric filter material (solvent resistant). Alternatively, the porous container can take the form of a stainless steel (or other non-reactive material) container, such as a container with a lid.

Where a porous container is used, holes or other apertures can be made small enough to filter out any solid pieces of the material that exceed a particular size, in order to reduce the amount of subsequent filtering (if any) required following the extraction.

The porous container can optionally be retained within extraction chamber 106. For example, it can be held by way of a frame or other solid support with extraction chamber, or by one or more flexible supports.

Solvent 104 is loaded into extraction apparatus 100. For example, solvent 104 can be poured into boiler 102 through condenser 114, although other methods of loading solvent 104 into extraction apparatus 100 can be used, depending upon which components can be disconnected from each other in the particular implementation. Loading of solvent 104 and material 116 can take place in any suitable order.

Extraction apparatus 100 is configured such that, in use, solvent 104 moves repeatedly through a cycle in which:
- Solvent 104 vaporizes within boiler 102;
- Vaporized solvent 104 passes from boiler 102 into extraction chamber 106 by way of conduit 112 and bubbles through condensed solvent 104 within extraction chamber 106, so as to agitate condensed solvent 104;
- Vaporized solvent 104 condenses in condenser 114 and returns as condensed solvent 104 to extraction chamber 106;
- Condensed solvent 104 interacts with material 116 in extraction chamber 106 to extract a compound of interest; and
- At least a portion of condensed solvent 14 containing the extracted compound returns to boiler 102 from extraction chamber 106.

This cycle can be established in different ways, depending upon the implementation.

For example, where the compound of interest is (or is expected to be) heat-tolerant, heat may be supplied to the outside of boiler 102 by a heat source (not shown) such as a heating jacket or heat exchanger. Solvent 104 is heated within boiler 102 until it reaches its vaporization temperature. Continued heating causes solvent 104 within boiler 102 to vaporize.

Vaporized solvent 104 passes upwards through conduit 112 into extraction chamber 106. Initially, there may be little or no liquid solvent 104 within extraction chamber 106, and so vaporized solvent 104 faces little resistance on its upward passage through conduit 112.

Vaporized solvent 104 then enters condenser 114, where it is condensed into liquid form. Liquid solvent 104 drips down from condenser 114. If material 116 is positioned underneath condenser 114, liquid solvent 104 will saturate material 116 (through pouch 118, where used). Liquid solvent 104 that is not absorbed by material 116, or which is released from material 116, moves to the bottom of extraction chamber 106 towards outlet 110.

Liquid solvent 100 and vaporized solvent 104 meet each other within conduit 112, each tending to impede flow of the other.

At least in the implementation of Figure 1, conduit 112 is configured such that the vaporized solvent 104 bubbles up through liquid solvent 104 that accumulates in lower portion 108 of extraction chamber 106. This bubbling of vaporized solvent 104 through liquid solvent 104 in lower portion 108 causes agitation, which improves extraction of compounds from material 116.

Conduit 112 can be configured in any suitable manner to achieve this outcome. For example, the inner diameter, length, and/or internal configuration of conduit 112 can be chosen such that, for a given set of operating conditions, vaporized solvent 104 rising through conduit 112 impedes downward flow of liquid solvent 104 sufficiently that liquid solvent 104 "backs up" within lower portion 108 of extraction chamber 106. In this context, "operating conditions" can include any one or more of solvent type, solvent viscosity, vaporization rate (controlled by the amount of heat supplied to solvent 104 within boiler 102), and desired depth of solvent 104 within lower portion 108 of extraction chamber 106, although other factors may apply depending upon the implementation. For example, for a higher vaporization rate, the inner diameter of conduit 112 can be increased, to allow more room for passage of liquid solvent 104 past vaporized solvent 104. Similarly, to increase a depth of solvent 104 within lower portion 108 of extraction, the inner diameter of conduit 112 can be decreased, to slow passage of liquid solvent 104 past vaporized solvent 104.

In general, and at least below a certain diameter that can easily be deduced by minimal experimentation falling well within the common general knowledge of the skilled person, reducing an inner diameter of conduit 112 will tend to impede the downward flow of liquid solvent more than the upward flow of vaporized solvent. Similarly, any internal configuration of conduit 112 that deviates from a straight-through configuration (such as a filter, or one or more baffles or changes of direction) will tend to impede the downward flow of liquid solvent more than the upward flow of vaporized solvent. Increasing length has a similar but lesser effect.

A dynamic way of adjusting the amount of solvent 104 that accumulates in extraction chamber 106 is to include a throttle, such as a valve, inline with conduit 112. One example of such a throttle is described in more detail in the implementation of Figure 2.

The temperature of solvent 104 within extraction chamber 106 is partly a function of the temperature of the condensed solvent 104 leaving condenser 114. As such, by using a relatively low-temperature condenser 114, lower extraction temperatures can be achieved. However, the need to boil solvent 104 within boiler 102 means that there is relatively high temperature vaporized solvent bubbling through liquid solvent 104 within extraction chamber 106, which increases the temperature of the liquid solvent 104 relative to its temperature as it leaves condenser 114.

To further reduce extraction temperature, extraction apparatus 100 can optionally comprise one or more vacuum connectors (not shown in Figure 1), to which a vacuum source (not shown) can be connected. Such connector(s) can be positioned in any suitable place relative to the components of extraction apparatus 100. For example, a single vacuum connector can be included at the top of condenser 114.

By applying a partial vacuum via such a vacuum connector, pressure within extraction apparatus 100 is reduced. Reducing pressure in this manner lowers the boiling point of solvent 104 within boiler 102. This means that the vaporized solvent 104 is of lower temperature than when a vacuum source is not used, which results in a lower average temperature of the liquid solvent 104 within extraction chamber 106.

Optionally, sufficient vacuum may be applied that the amount of heat required to boil solvent 104 is significantly reduced, and potentially reduced to the point where it can be supplied solely by the surrounding ambient air (or other fluid within which boiler 102 sits).

As vacuum is applied, the boiling temperature of liquid solvent 104 reduces. If the boiling temperature falls below the current temperature of liquid solvent 104, vaporization of solvent 104 increases rapidly. Assuming the temperature of liquid solvent 104 is below, equal to, or at least not far above ambient during this process, and the solvent is not being heated, then vaporization largely uses the internal heat of liquid solvent 104 (i.e., the energy within liquid solvent 104 is used to drive the vaporization). As such, as vaporized solvent leaves liquid solvent 104 within boiler 102, the temperature of liquid solvent 104 falls due to the vaporization. Unless the vacuum is actively applied as this happens, the pressure within extraction apparatus 100 rises due to the vaporization of liquid solvent 104.

By continuing to increase the vacuum (i.e., continuing to lower the pressure within extraction apparatus 100), the temperature of liquid solvent 104 within boiler 102 will continue to fall as solvent continues to vaporize within boiler 102. As long as the operating temperature within condenser 114 remains cold enough to condense vaporized solvent 104 that enters it, the temperature of solvent 104 in boiler 106 and extraction chamber will therefore continue to fall as the vacuum increases.

By gradually increasing vacuum/reducing pressure, heat within liquid solvent 104 continues to be lost during vaporization. Eventually, the solvent temperature can drop low enough relative to ambient that heat absorbed from the apparatus's surroundings becomes sufficient to maintain boiling without the large vacuum pressure changes that took place while the solvent cooled from initially being at a higher temperature (such as room temperature, for example). The particular temperature at which this happens, and the rate at which energy can be absorbed from the environment to drive vaporization, are a function of variables such as the surface area and thermal conduction properties of the boiler wall, the rate at which the surrounding environment can supply heat energy (e.g., immersing boiler 102 in a liquid may improve heat transfer relative to boiler 102 being surrounded by air), the solvent(s) in use (and it/their associated vapour/temperature curve(s)), and other factors that will be understood by the skilled person. Optionally, solvent 104 can be pre-cooled to, or at least towards, the temperature at which this happens, which reduces the amount of time for the system as a whole to equilibrate.

As a result, thermolabile or otherwise heat-sensitive compounds can be extracted from material 116 by solvent 104 with reduced risk of damage due to temperature and/or oxidization.

Once material 116 has been extracted for a long enough time, and/or if too much solvent is in extraction chamber 106 relative to boiler 102, any heat provided to boiler 102 can be reduced or stopped. Alternatively, or in addition, if a vacuum source is being used, the pressure can be increased to stop vaporization of solvent 104.

As vapor production reduces and then stops, liquid solvent 104 in extraction 106 is less impeded by rising vaporized solvent 104. This allows drainage of liquid solvent 104 through conduit 112 to increase, until most of it eventually returns to boiler 102.

At this point, liquid solvent 104 in boiler 102 contains the compound of interest extracted from material 116.

The process described above can be repeated as many times as desired, by draining solvent 104 into boiler 102 from extraction chamber 106.

When no further extraction is required, the liquid solvent can be decanted for further processing. For example, the decanted solvent 104 can be roto-vaped, evaporated, or distilled off (optionally at low pressure/temperature to protect thermolabile compounds) to concentrate the extracted compound.

Alternatively, solvent 104 can be left in boiler 102 and an alternative condenser fitted to allow distillation of solvent 104 out of boiler 102 (optionally at low pressure/temperature), leaving behind the extracted compound. Further alternatives are described below with reference to the implementation of Figure 2.

Turning to Figure 2, there is shown an alternative extraction apparatus 200. Extraction apparatus 200 shares a number of components and features with extraction apparatus 100, and such shared components and features are indicated with like reference signs. The skilled person will appreciate that minor changes may need to be made to account for differences between extraction apparatus 100 and extraction apparatus 200, such changes being well within the common general knowledge of the skilled person.

In the implementation of Figure 2, boiler 102 includes a drain valve 120 at its bottom end, for draining solvent when required (e.g., after extraction is finished). Boiler 102 also includes a solvent feed valve 122 that can be opened to allow charging of boiler 102 with solvent at the start of the procedure, and optionally to top up boiler 102 with solvent during operation if required.

In the implementation of Figure 2, conduit 112 includes a throttle valve 124 for controlling the rate at which vaporized solvent 104 passes upwards through conduit 112 and condensed solvent 102 passes downward through conduit 112. Throttle valve 124 can manually be controlled during operation to control a level of solvent 104 in extraction chamber 106.

A filter 126 acts to catch any pieces of material that move through conduit 112, to prevent contamination of solvent 104 containing extracted compounds from material 116. Filter 126 also acts to slow passage of solvent. A relatively porous filter 126 may need to be used, to avoid over-restricting passage of solvent 104. The appropriate pore size can be calculated and/or determined experimentally.

In the implementation of Figure 2, extraction chamber 106 includes a material feed port for allowing charging of extraction chamber 106 with material 116, the start of the procedure and optionally to add further material during operation if required. This can safely be done as long as solvent 104 is not being vaporized and the pressure within extraction apparatus 100 is at or close to ambient pressure.

Extraction chamber 106 also includes a re-pressurizing valve 130 that can be manually operated to allow air into extraction chamber 106 (and hence extraction apparatus 200) at the end of the extraction procedure, allowing the pressure to rise to ambient.

Extraction chamber 106 also includes a further drain valve 132, which allows sampling or collection of solvent 104 (containing extracts). This can safely be done as long as solvent 104 is not being vaporized, drain valve 124 is closed, and the pressure within extraction apparatus 100 is at or close to ambient pressure.

In the implementation of Figure 2, condenser 114 comprises a vacuum dewar, for use with a cryogenic cooling fluid such as acetone or another liquid over dry ice. Other forms of condenser can be used for liquid-nitrogen-based cooling fluid, for example. The skilled person understands the types of cooling fluids and condensers that may be used depending on the temperature required.

A further condenser in the form of a cold-trap 134 housing a cooling bath mixture is disposed downstream (relative to the path taken by vaporized solvent 104 after leaving extraction chamber 106) and uses a similar cryogenic cooling fluid to condenser 114. Cold-trap 134 operates to capture any vaporized solvent 100 that escapes condenser 114.

Optionally, cold-trap 134 can use a cryogenic cooling fluid at a lower temperature than condenser 114, to ensure its effectiveness in capturing escaped solvent 104. Cold-trap 134 drains into a solvent capture vessel 136 from which it can be drained via a drain valve 138.

Solvent capture vessel 136 includes a vacuum connection 140 that is connected to a vacuum pump 142 via a vacuum gauge 144 and a pressure regulator valve 146. Vacuum connection 140, vacuum pump 142, vacuum gauge, 144, and regulator valve 146 are connected to each other using suitable vacuumrated tubing and connectors.

All connections are sealed with a suitable seal or sealant, if required. Depending upon the compound(s) being targeted, and especially where vacuum is to be used, parafilm or another physical seal may be preferred, to avoid contamination from grease or other sealants that might leak undesirable solvents or other chemicals into extraction apparatus 100 during operation.

In use, extraction apparatus 200 is charged with material 116 via material feed port 128, which is then sealed. Drain valve 120 is closed, and solvent 104 is added to boiler 102 by way of solvent feed valve 122, which is then sealed. Optionally, solvent can be pre-cooled (for cryogenic extractions) or preheated (for heat assisted extractions) before adding it to extraction apparatus 200.

Throttle valve 124 is initially opened completely, although if the operating parameters are known in advance, throttle valve 124 can initially be moved to a suitable intermediate position. Further drain valve 132, repressuring valve 130 and drain valve 138 are closed. With all valves except throttle valve 124 and regulator valve 146 closed, extraction apparatus 200 is ready for low-pressure extraction.

Once these steps have been taken, vacuum pump 142 is turned on, and the pressure within extraction apparatus 200 reduced. As the pressure falls, the boiling point of solvent 104 within boiler 102 also falls.

When the pressure falls to the boiling point of solvent 104 at the current temperature, solvent 104 begins to evaporate within boiler. This causes the temperature of solvent 104 within boiler 102 to fall, due to the energy being extracted by the evaporating solvent. The cooling of liquid solvent 104 means that the pressure needs to keep dropping in order to keep the solvent boiling. As long as vacuum pump 142 can continue to reduce the pressure within extraction apparatus 200, solvent 104 will continue to boil as its temperature falls.

When the temperature of solvent 104 falls sufficiently below that of the surroundings, the pressure can be kept constant while vaporization continues due to the supply of heat from the surroundings through the walls of boiler 102.

Vaporized solvent 104 initially rises unimpeded through conduit 112, passing into extraction chamber 106, around material 116, and then rising into condenser 114. Vaporized solvent 104 condenses within condenser 114, and drips down into extraction chamber 106. Optionally, condensed solvent 104 drips onto material 116, saturating it. Condensed solvent 104 continues to move towards outlet 100, into conduit 112, and then drops into boiler 102.

In some configurations, and/or under particular operating conditions, the movement of vaporized solvent 104 through conduit 112 from boiler 102 can be vigorous enough to prevent any (or any significant) return of solvent 104 to boiler until vaporization is stopped or sufficiently reduced.

The flow of condensed solvent 104 down through conduit 112 is impeded or even stopped by the upward movement of vaporized solvent 104 through conduit 112. Condensed solvent 104 begins to accumulate in extraction chamber 106. As the depth of solvent 104 in extraction chamber 106 increases, its downward pressure increases, which tends to increase flow against rising vaporized solvent within conduit 112.

As condensed solvent 104 accumulates, it begins to cover material 116. Bubbles of vaporized solvent 104 rising through condensed solvent 104 in extraction chamber 106 agitate material 116, which helps with extraction. Without wishing to be constrained by theory, the vaporized solvent in the bubbles interacting with the material may also help improve extraction due to better penetration of the vaporized solvent

The operator of extraction apparatus 200 can control various parameters. In particular, adjusting throttle valve 124 allows some control over the depth of condensed solvent 104 within extraction chamber. Adjusting throttle valve 124 to reduce flow tends to tip the balance in favour of the vaporized solvent. That is, by effectively reducing the diameter of the conduit by partly closing throttle valve 124, liquid solvent finds it relatively more difficult to pass downwards than vaporized solvent finds it to move upwards. Reducing the diameter in this way therefore tends to encourage deeper accumulation of liquid solvent within extraction chamber 106.

The depth is also a factor of parameters such as the current boiling rate of solvent 104 within boiler 102, and the pressure within extraction apparatus 200. Given the general teaching of the invention, the impact of changes to such factors can be determined by the skilled person exercising their common general knowledge.

By controlling these parameters, the compound of interest can be extracted from material 116 at relatively low temperatures, which may help protect thermolabile compounds from being thermally decomposed. Where vacuum is used, there is less oxygen within extraction apparatus 200, which may reduce oxidization of susceptible compounds.

If heat is to be used, it can be applied to boiler 102 in any suitable way before, during, and/or after vacuum pump 142 is turned on. It can be used continuously or intermittently, and the power output can be kept constant or modulated over time to suit the particular operating conditions.

Even if the extraction is performed at a temperature that is not significantly lower than, for example, room temperature, or 0 degrees C, the use of vacuum can allow for better extraction and reduced thermal degradation and/or oxidization of a compound to be extracted.

Optionally, the extracted compounds can be concentrated or even freeze dried without draining liquid solvent 104 from extraction apparatus 100. This is achieved by continuing to vaporize solvent within boiler 102, but preventing the vaporized solvent from being condensed and returned to extraction chamber 106 or boiler 102. This can be achieved by preventing condenser 114 from condensing the vaporized solvent. For example, condenser 114 can have its cooling fluid removed, which will reduce or even completely prevent condensation of vaporized solvent 104 passing through condenser 114. Cold-trap 134 can then condense vaporized solvent 104 for collection in solvent capture vessel 136. This process can be stopped when the required level of concentration has been achieved, at which point the remaining solvent 104 can be drained from boiler 102.

Optionally, substantially all of the solvent can be removed in this manner, resulting in only the extracted compound being left in boiler 102. Depending on the nature of the extracted compound, and the particular operating parameters chosen, it may be possible to use extraction apparatus 100 to effectively freeze dry the extracted compound.

The implementations of Figures 1 and 2 use a single conduit 112, which has the benefit of simplicity. The skilled person will appreciate, however, that two or more conduits may be used in other implementations. In such implementations, the conduits need not be the same as each other, and may have different inner diameters, lengths, and configurations. Where a throttle is used, it need not control flow through all of conduits.

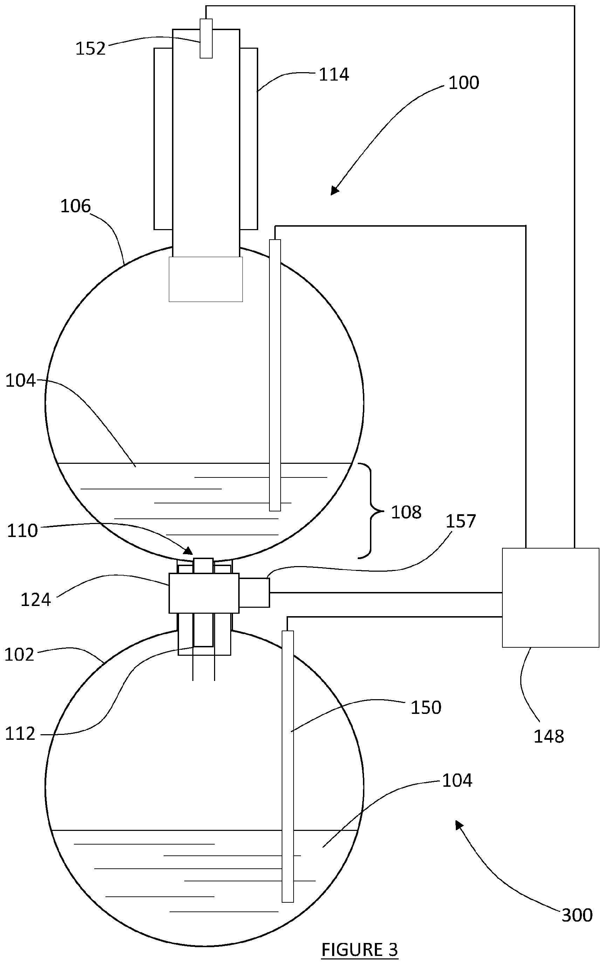

Optionally, one of more of the operating parameters can be controlled by a controller. For example, Figure 3 shows an extraction apparatus 300. Extraction apparatus 300 shares a number of components and features with extraction apparatus 100 and 200, and such shared components and features are indicated with like reference signs. The skilled person will appreciate that minor changes may need to be made to account for differences between extraction apparatus 100/200 and extraction apparatus 300, such changes being well within the common general knowledge of the skilled person.

Extraction apparatus 300 comprises a controller 148. Controller 148 can comprise a microcontroller or other processing device that can be programmed to control one or more operating parameters of extraction apparatus 300 based on one or more inputs.

For example, controller 148 can include one or more inputs for receiving signals indicative of one or more operating parameters of extraction apparatus. For example:
- A thermal probe 150 can provide a temperature signal to controller 148, indicative of a temperature of solvent 104 within boiler;
- A pressure sensor 152 can provide a pressure signal to controller 148 indicative of a pressure within extraction apparatus 300;
- A depth sensor 154 can provide a depth signal to controller 148 indicative of a depth of solvent 148 within extraction chamber 106 (noting that accuracy may be affected by vigorous agitation); and/or
- A flow rate sensor 157 can determine:
   - A flow rate of the condensed solvent from the extraction chamber into the boiler; and/or
   - A flow rate of the vaporized solvent from the boiler into the extraction chamber.

Any or all of such probes and sensors can provide an actual value for the parameter measured, or can provide a simple on/off signal indicative of whether a value is above or below a threshold. Any such threshold may be fixed or programmable, depending upon the requirements of the particular implementation. The sensors used to provide such signals are well known to the skilled person, and so will not be described in detail.

Controller 148 can include one or more outputs for providing control signals to one or more components of extraction apparatus 300. For example:
- Throttle valve 124 (not shown in Figure 3 for clarity) can include a stepper motor (not shown), such that a position of throttle valve 124 can be controlled by a stepper motor signal sent from controller 148;
- Vacuum pump 142 (not shown in Figure 3 for clarity) can be controlled by a signal from controller 148; and/or
- A heater (if used) can be controlled by a signal from controller 148.

Any or all of such control signals can provide a control value, or a simple on/off signal.

Controller 148 can use simple on/off control techniques, or more sophisticated control processes, based on, for example, proportional, PID, or fuzzy logic control schemes, or the like.

Optionally, controller 148 is configured to control the rate(s) such that the amount of condensed solvent 104 within the extraction chamber 106 tends towards a constant, although it may also be acceptable to control that amount of condensed solvent 104 within a range.

The skilled person will appreciate that any subset of the inputs can be used to generate any subset of the outputs. The skilled person will also appreciate that the listed input and outputs are non-exhaustive, and that one or more other inputs and/or outputs may be used with controller 148.

Optionally, boiler 102 can be at least partly immersed in a bath that provides heat energy. For example, the lower half of boiler 102 can be immersed in a water bath that is at a suitable temperature for providing heat to drive vaporization.

Optionally, boiler 102 can be arranged to rotate in a similar manner to a rotary evaporator, which can increase vaporization of solvent 104 within boiler 102.

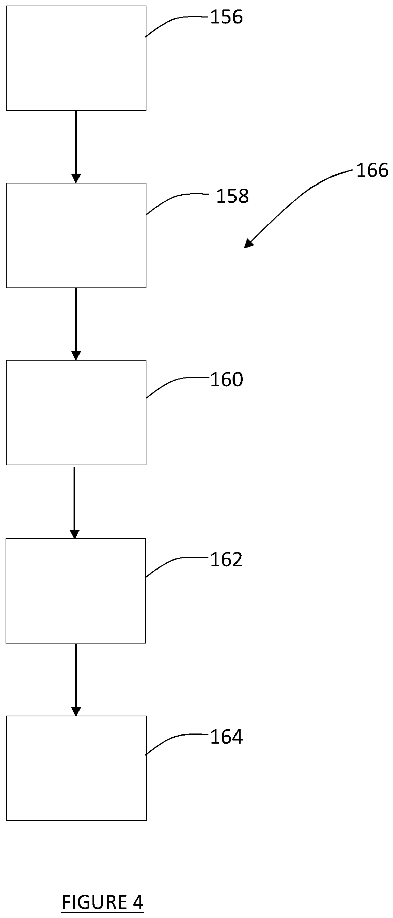

Turning to Figure 4, there is shown a method 166 of extracting a compound from a material. Such a method can use an apparatus such as extraction apparatus 100, 200, or 300, or any other suitable apparatus.

The method comprises loading 156 the apparatus with solvent and loading 158 the material into the extraction chamber, for example as described above. Pressure within the extraction apparatus is reduced and/or the solvent is heated 158 in the boiler, such that the solvent vaporizes.

The vaporized solvent is passed 160 from the boiler through the extraction chamber by way of the at least one fluid connection, such that the vaporized solvent bubbles through the condensed solvent in the extraction chamber so as to agitate the condensed solvent.

The vaporized solvent is condensed 162 in the condenser, and the condensed solvent is returned to the extraction chamber such that it extracts the compound from the material in the extraction chamber.

At least a portion of the condensed solvent containing the extracted compound is returned 164 to the boiler from the extraction chamber.

Optionally, a rate(s) at which the vaporized solvent passes from the boiler to the extraction chamber, and/or the condensed solvent returns to the extraction chamber from the boiler, is controlled such that condensed solvent accumulates in the extraction chamber so as to at least partly submerge the material.

Optionally, the method comprises sensing an amount of the condensed solvent within the extraction chamber, and controlling the rate(s) so as to control the amount of the condensed solvent within the extraction chamber.

For example, the rate(s) can be controlled such that the amount of the condensed solvent within the extraction chamber tends towards a constant.

When the fluid connection comprises at least one conduit or aperture disposed fluidically between the boiler and the extraction chamber, the method can comprise passing the vaporized solvent from the boiler, and the condensed solvent from the extraction chamber, in opposite directions through the least one conduit or aperture.

Optionally, the method comprises reducing the pressure within the extraction apparatus so as to reduce a boiling temperature of the solvent within the boiler. For example, the method can comprise reducing the pressure within the extraction apparatus, such that a boiling temperature of the solvent within the boiler is lower than an ambient temperature.

### EXAMPLES

### Example 1

An extraction apparatus 200 was set up as shown in Figure 2. Boiler 102 was a 2 L round-bottom flask, extraction chamber 106 was a 1 L separatory funnel, and condenser 114 was a 500ml Dewar condenser.

Hexane was used as a solvent. The initial solvent volume in boiler 102 was 1.5 L, which was sufficient to eventually fully submerge material 116 in extraction chamber 106 during operation of extraction apparatus 200.

The cooling fluid for both condenser 114 and cold-trap 134 was dry ice acetone at approximately -78 degrees Celsius. The cooling fluid in the Dewar was topped up at regular intervals (about every 15-20 minutes) as the temperature dropped.

Ambient temperature was approximately 20-22 degrees Celsius.

The material to be extracted was 790 g of soursop leaf powder at approximately 7% moisture content, divided into four batches: 200g, 200g, 200g and 190g.

Each batch of soursop leaf powder was loaded into a microporous nylon pouch 118. The first of the pouches 118 was loaded into extraction chamber 106 and pre-wetted with 300 mL hexane, resulting in a system total of 1.8 L of hexane. Prewetting was found to increase the speed at which the process described below initialized.

The various valves were set as described above in relation to the Figure 2 embodiment, and vacuum pump 142 was turned on.

As the pressure was gradually reduced by vacuum pump 142, solvent 104 began vaporizing, passing through conduit 112 and extraction chamber 106, before condensing in condenser 114 and returning to extraction chamber 106 in liquid form.

The temperature of solvent 104 in boiler 102 fell during this process, until it reached approximately 2-4 degrees Celsius. At this time, liquid solvent 104 within extraction chamber was below 0 degrees Celsius, as determined by the formation of ice on the outer surface of extraction chamber 106.

A gauge pressure of approximately 720-740 mmHg was manually maintained from this point, by controlling pressure regulation valve 146. This corresponded to an estimated 20-50 mmHg within extraction apparatus.

Throttle valve 124 was adjusted so that condensed solvent 104 gradually accumulated within extraction chamber 106, while allowing some return of condensed solvent 104 to boiler 102. Bubbling of vaporized solvent 104 through liquid solvent 104 agitated pouch 118.

Solvent 104 gradually accumulated in extraction chamber until it completely submerged pouch 118. About 20 minutes after this point, most of solvent 104 had accumulated in extraction chamber 106. Vacuum pump 142 was shut off, and repressurizing valve 130 opened slightly to allow pressure within extraction apparatus 100 to equalize with the ambient pressure. Throttle valve 124 was then opened fully to allow solvent 104 to drain from extraction chamber 106 into boiler 102. Once substantially all of solvent 104 had returned to boiler 102, repressuring valve 130 was closed.

A 0.5 mL sample of solvent 104 (now containing extracts from material 116) was taken from boiler 102 and diluted with fresh solvent. The concentration of extracts within the diluted solvent was then estimated by UV-vis absorbance.

Throttle valve 124 was partly closed, and vacuum pump 142 was turned back on to re-commence the extraction process as described above.

The process was repeated until consecutive UV-vis absorbance tests showed no significant change, indicating that full extraction had taken place. For the first batch, the process was repeated 7 times before extraction was complete.

The process was repeated for the subsequent batches. Each batch was added to the extraction chamber and wetted with 300 mL of hexane (to make up for the hexane that was taken out of the apparatus due to being soaked into material 116 in the pouch 118 from the previous batch). The number of times the process was repeated until full extraction was achieved is shown in the following table:

| Batch | Sample weight (grams) | Solvent added (Litres) | Number of percolations for complete batch extraction |
|---|---|---|---|
| 1 | 200 | 1.8 | 7 |
| 2 | 200 | 0.3 | 5 |
| 3 | 200 | 0.3 | 6 |
| 4 | 190 | 0.3 | 4 |

TOTAL= 790 g of material, 2.7 L of solvent, 22 repetitions of process

After removing the solvent and combining the extracts from all batches, the yield was approximately 23 g of non-polar compounds (noting that most compounds in leaf/bark powder are polar and solvent used - hexane - was non-polar).

The compounds in the extract showed cytotoxicity against BT474 human breast cancer cell lines.

### Example 2

The apparatus was set up as described in Example 1, except that boiler 102 was partly immersed in a water bath at 35 degrees Celsius.

The additional energy delivery rate provided by the warmer and higher thermal capacity water (compared to ambient air in Example 1) caused increased vaporization of solvent 104 within boiler. The increased vaporization rate generally increased the speed at which extraction took place, due to increased agitation and the rate at which solvent 104 cycled through the boil-condense process.

Example 2 led to similar results in terms of the number of process cycles required to achieve full extraction, but this was achieved faster, at the cost of slightly increased complexity and higher extraction temperature due to the water bath.

The skilled person will appreciate that a similar result (in terms of reduced cycle time and increased agitation) could be achieved with the use of lower pressures instead of the use of a water bath or other heat source.

The skilled person will appreciate that the extraction apparatus can take many other forms. It can be scaled up for industrial extraction, or used at small scale using laboratory glassware for research purposes.

Although the invention has been described with reference to a number of specific implementations, the skilled person will appreciate that the invention may be embodied in many other forms.

## Claims

1. An extraction apparatus comprising:
a boiler for holding a solvent;
an extraction chamber for holding material from which a compound is to be extracted by the solvent;
a condenser for condensing vaporized solvent, and returning the condensed solvent to the extraction chamber; and
a fluid connection between the boiler and the extraction chamber for allowing passage of vaporized solvent from the boiler to the extraction chamber and condensed solvent from the extraction chamber to the boiler;
the extraction apparatus being configured such that, when the extraction apparatus is in use, the solvent moves repeatedly through a cycle in which:
the solvent vaporizes within the boiler;
the vaporized solvent passes from the boiler into the extraction chamber by way of the at least one fluid connection, and bubbles through condensed solvent within the extraction chamber so as to agitate the condensed solvent;
the vaporized solvent condenses in the condenser and returns as condensed solvent to the extraction chamber; and
the condensed solvent interacts with the material in the extraction chamber to extract the compound.

2. The extraction apparatus as claimed in claim 1, configured such that at least a portion of the condensed solvent containing the extracted compound returns to the boiler from the extraction chamber by way of the at least one fluid connection.

3. The extraction apparatus as claimed in claim 1 or claim 2, wherein the at least one fluid connection comprises at least one throttle for controlling a rate(s) at which:
the vaporized solvent passes from the boiler to the extraction chamber; and/or
the condensed solvent returns to the extraction chamber from the boiler.

4. The extraction apparatus as claimed in claim 3, wherein the at least one throttle comprises a valve.

5. The extraction apparatus as claimed in claim 3 or claim 4, wherein the at least one throttle is adjustable to control the rate(s).

6. The extraction apparatus as claimed in any one of claims 3 to 5, comprising a controller for controlling the rate(s) by modulating the at least one throttle.

7. The extraction apparatus as claimed in claim 6, wherein the controller comprises one or more level sensors for sensing an amount of the condensed solvent within the extraction chamber, the controller being configured to control the rate(s), based at least partly on the sensed amount, so as to control the amount of the condensed solvent within the extraction chamber.

8. The extraction apparatus as claimed in claim 6 or claim 7, comprising one or more flow sensors for determining:
a flow rate of the condensed solvent from the extraction chamber into the boiler; and/or
a flow rate of the vaporized solvent from the boiler into the extraction chamber.

9. The extraction apparatus as claimed in any one of claims 6 to 8, wherein the controller is configured to control the rate(s) such that the amount of the condensed solvent within the extraction chamber tends towards a constant.

10. The extraction apparatus as claimed in any one of the preceding claims, wherein the fluid connection comprises at least one conduit or aperture disposed fluidically between the boiler and the extraction chamber and wherein the extraction apparatus is configured such that the vaporized solvent from the boiler and the condensed solvent from the extraction chamber pass in opposite directions through the least one conduit or aperture.

11. The extraction apparatus as claimed in any one of the preceding claims, comprising a first connector for connection to a source of reduced pressure, the extraction apparatus preferably being configured such that, in use, reducing the pressure within the extraction apparatus by way of the first connector reduces a boiling temperature of the solvent within the boiler.

12. A method of extracting a compound from a material, using the apparatus of any preceding claim, the method comprising:
loading the apparatus with solvent;
loading the material into the extraction chamber;
reducing a pressure within the extraction apparatus, and/or heating the solvent in the boiler, such that the solvent vaporizes;
passing the vaporized solvent from the boiler through the extraction chamber by way of the at least one fluid connection, such that the vaporized solvent bubbles through the condensed solvent in the extraction chamber so as to agitate the condensed solvent;
condensing the vaporized solvent in the condenser; and
returning the condensed solvent to the extraction chamber such that it extracts the compound from the material in the extraction chamber.

13. The method as claimed in claim 12, comprising:
returning at least a portion of the condensed solvent containing the extracted compound to the boiler from the extraction chamber.

14. The method as claimed in claim 12 or claim 13, comprising controlling a rate(s) at which:
the vaporized solvent passes from the boiler to the extraction chamber; and/or
the condensed solvent returns to the extraction chamber from the boiler;
such that condensed solvent accumulates in the extraction chamber, so as to at least partly submerge the material.

15. The method as claimed in claim 14, comprising:
sensing an amount of the condensed solvent within the extraction chamber; and
controlling the rate(s) so as to control the amount of the condensed solvent within the extraction chamber, preferably controlling the rate such that the amount of the condensed solvent within the extraction chamber tends towards a constant.
